# EUROPEAN PATENT APPLICATION

(11) **EP 4 220 839 A1**
(43) Date of publication of application: **02.08.2023**
(21) Application number: 21871988.8
(22) Date of filing: 03.08.2021
(51) Int. Cl.: H01M 50/317, H01M 50/333, H01M 50/35, H01M 50/383

(54) **BATTERY PACK AND INSTRUMENT HAVING FUNCTION OF DISCHARGING GAS FROM BATTERY PACK**

(30) Priority: 25.09.2020 JP 2020160760
(71) Applicant: Panasonic Intellectual Property Management Co., Ltd., Osaka-shi, Osaka 540-6207 (JP)
(72) Inventor: SHIMIZU, Keisuke, Chuo-ku, Osaka-shi, Osaka 540-6207 (JP); SAKAGAWA, Yasuaki, Chuo-ku, Osaka-shi, Osaka 540-6207 (JP)
(74) Representative: Novagraaf International SA
(86) International application number: PCT/JP2021/028695
(87) International publication number: WO 2022/064856

(57) **Abstract**

A device is adapted for use with a battery pack (10) including a plurality of batteries (50) and a case (90) including an exhaust hole (41) and a sealing member (43) closing the exhaust hole (41), and is configured to discharge gas from case (90). The device includes: a pedestal (61) on which the battery pack is to be placed; a gas inlet hole (41) formed in the pedestal (61) at a location overlapping the exhaust hole (41) of the battery pack; a discharge duct (64) being a vent path formed in the pedestal (61) and communicating with the gas inlet hole (41), for guiding the gas discharged from the battery pack (10) to outside of the device; and a pressing part (63) protruding from the gas inlet hole (61), the pressing part (63) configured to press the sealing member (43) of the battery pack (10)

## Description

### TECHNICAL FIELD

The present disclosure relates to a battery pack and a device configured to exhaust gas from the battery pack.

### BACKGROUND ART

Non-aqueous electrolyte secondary batteries such as lithium-ion batteries may often be used in the form of battery pack, in which a plurality of batteries are electrically connected to each other and enclosed in a case. When an abnormal condition occurs in a battery within the battery pack, it is possible that the battery may generate a large amount of high-temperature flammable gas. If the generated gas is not expelled out of the battery pack appropriately, there may be a risk that the internal pressure of the battery pack increases, resulting in rupture of the battery pack case. Generally, it is required that the battery pack case have a hermetically sealed structure in order to prevent water or dust from entering the inside of the battery pack. However, in cases where an abnormal condition occurs in a battery and consequently the internal pressure of the case increases, it is necessary to expel the gas to outside urgently.

In many cases, abnormal conditions of a battery tend to occur during charge, during which the battery is connected to a charger. For example, PTL 1 discloses a charger that causes a vent hole of a battery pack to open when charging the battery pack.

### CITATION LIST

### Patent Literature

PTL 1: Japanese Utility Model Unexamined Publication No. H06-064360

### SUMMARY

### Technical Problem

In the charger disclosed in PTL 1, however, it is foreseen that the gas exhausted from the battery pack remains in a gap space between the battery pack and the charger, so that the gas from the battery pack will not be exhausted smoothly. Moreover, electrode contacts for charging are present in the gap space between the battery pack and the charger. There is a possibility that when the gas is exhausted violently, contact failure occurs between the contacts. Because the generated gas is flammable, there is a risk of catching fire and causing fire in some cases.

It is an object of the present disclosure to provide a means to smoothly and safely exhaust gas from a battery pack when an abnormal condition occurs in a battery and the internal pressure of a battery pack increases.

### Solution to Problem

According to the present disclosure, a battery pack includes a plurality of batteries, and a case enclosing the plurality of batteries. The case includes: an exhaust hole penetrating the case; a partition wall being in a closed-bottomed tubular shape, the partition wall surrounding the exhaust hole within the case; a sealing member disposed within a tube defined by the partition wall, the sealing member closing the exhaust hole; and a biasing member disposed within the tube defined by the partition wall and biasing the sealing member in a direction toward the exhaust hole. The partition wall includes a vent hole forming a gas exhaust path together with the exhaust hole. The sealing member is configured to move inward when pressed from outside of the case to open the exhaust hole.

According to the present disclosure, a device configured to exhaust gas is adapted for use with a battery pack including a plurality of batteries and a case enclosing the plurality of batteries and including an exhaust hole and a sealing member closing the exhaust hole. The device includes: a pedestal on which the battery pack is to be placed; a gas inlet hole formed in the pedestal at a location overlapping the exhaust hole of the battery pack; a exhaust duct being a vent path formed in the pedestal and communicating with the gas inlet hole, for guiding the gas exhausted from the battery pack to outside of the device; and a pressing part protruding from the gas inlet hole, the pressing part configured to press the sealing member of the battery pack.

### Advantageous Effects of Invention

The battery pack and the device provided with a gas exhausting function according to the present disclosure make it possible to exhaust gas smoothly and safely from the battery pack when an abnormal condition occurs in a battery therein and the internal pressure of the battery pack increases.

### BRIEF DESCRIPTION OF THE DRAWINGS

Fig. 1 is an external appearance view illustrating a battery pack and a charger according to an exemplary embodiment of the present disclosure.
Fig. 2 is a cross-sectional view of the battery pack of Fig. 1 taken along line A-A.
Fig. 3 is a cross-sectional view illustrating a part of the charger according to the present disclosure when it actuates an exhaust mechanism of the battery pack.
Fig. 4 is a cross-sectional view illustrating a part of the battery pack according to the present disclosure when it is placed on an electrical appliance.

### DESCRIPTION OF EMBODIMENTS

Hereafter, exemplary embodiments of the present disclosure will be described in detail with reference to the drawings. Specific shapes, materials, directions, numerical values, and the like mentioned in the following description are merely illustrative examples for the purposes of facilitating understanding of the present disclosure, and they may be changed or modified to meet the applications of use, purposes, specifications, and the like.

### First Exemplary Embodiment

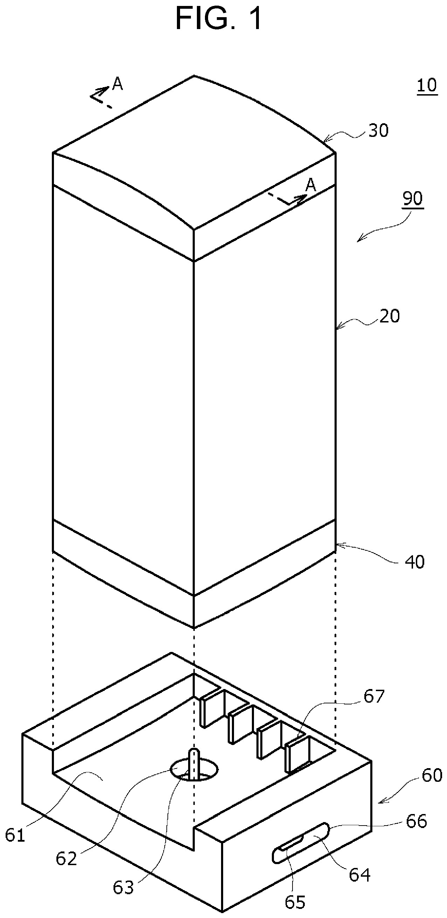

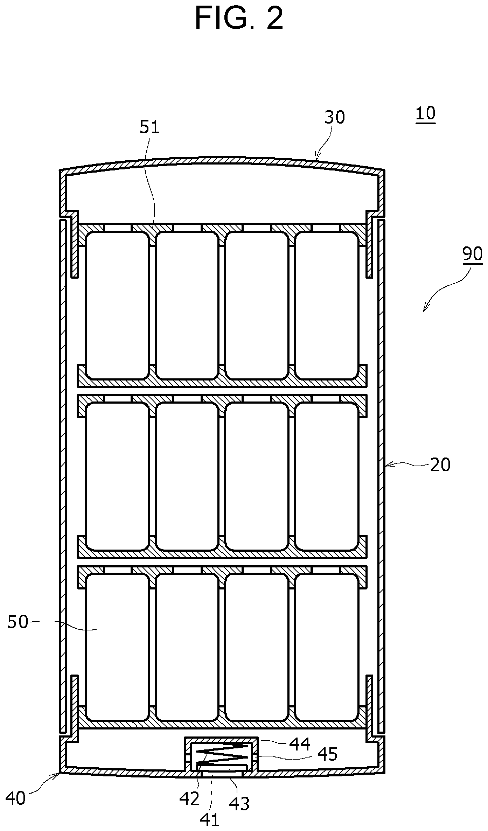

Fig. 1 is an external appearance view illustrating battery pack 10 according to a first exemplary embodiment of the present disclosure. Fig. 2 is a cross-sectional view taken along line A-A in Fig. 1; As illustrated in Figs. 1 and 2, battery pack 10 includes a plurality of batteries 50 and case 90. Case 90 includes case main body 20 enclosing the plurality of batteries 50, and case lid 30 and case bottom 40 closing respective openings of case main body 20. Case 90 has such a structure that each of the openings of case 90 formed in a prismatic tubular shape is closed respectively by case lid 30 and case bottom 40 to hermetically seal the internal space. This prevents water or dust from entering the inside of case 90. Hereinbelow, for ease of illustration, case lid 30 side of case 90 is referred to as top, case bottom 40 side is referred to as bottom, and the direction in which case lid 30, case main body 20, and case bottom 40 are lined up is referred to as the vertical direction.

A plurality of batteries 50 are electrically connected to each other to construct a battery module. The battery module has a structure in which, for example, a plurality of battery groups each including a plurality of batteries 50 connected in parallel are connected in series, so as to output a voltage that is suitable for the appliance that uses the battery module. Each of batteries 50 is, for example, a cylindrical battery. Although Fig. 2 shows a cylindrical battery as an example of battery 50, the battery is not limited to a cylindrical battery but may be a prismatic battery, a laminate battery, or the like. Battery 50 may be either an aqueous battery or a non-aqueous battery. An example of the non-aqueous battery is a lithium-ion battery.

Battery 50 is a cylindrical battery including a closed-bottomed cylindrical tubular outer covering can, and a sealing element that closes an opening of the outer covering can. An insulative gasket is provided between the outer covering can and the sealing element. In a cylindrical battery, generally, the sealing element serves as the positive electrode terminal, and the outer covering can serves as the negative electrode terminal. The sealing element is provided with a vent valve for exhausting gas when an abnormal condition occurs in battery 50 and the internal pressure rises. Note that the vent valve may be provided at the bottom of the outer covering can.

The plurality of batteries 50 are accommodated in holder 51 within case 90. Holder 51 fixes the arrangement of batteries 50 and maintains the form of the battery module. In addition, battery pack 10 includes, for example, terminal plates that electrically connect the plurality of batteries 50. The terminal plates include a positive electrode terminal plate electrically connected to the sealing element, which is the positive electrode terminal of each of batteries 50, and a negative electrode terminal plate electrically connected to the outer covering can, which is the negative electrode terminal of each of batteries 50. The terminal plates may be integrated with holder 51.

Case 90 is provided with an external terminal (not shown) electrically connected to each of batteries 50. The external terminal is provided, for example, on case bottom 40 and is used as a terminal for supplying a direct-current voltage when battery pack 10 is built into an appliance that is used with battery pack 10. The external terminal is also used in charging battery pack 10 (batteries 50).

With reference to Figs. 1 to 2, the gas exhausting function of battery pack 10 will be described in detail.

As illustrated in Figs. 1 and 2, case 90 that forms battery pack 10 includes case main body 20, case lid 30, and case bottom 40. Case 90 is formed into a rectangular parallelepiped shape elongated in a vertical direction. Case 90 may be made of either resin or a metal. Case main body 20 is, as mentioned above, formed into a prismatic tubular shape the top and both ends of which are open. Case 90 has a structure in which the opening on the top end of case main body 20 is closed with case lid 30 and the opening on its lower end is closed by case bottom 40. In the internal space of hermetically sealed case main body 20, the plurality of cells 50 are arranged facing in a direction toward case lid 30. However, the number, arrangement and the like of the batteries are not limited to those shown in Fig. 2.

Case bottom 40 is formed with exhaust hole 41, which penetrates case bottom 40. Exhaust hole 41 is, for example, a circular-shaped hole. Partition wall 44 having a closed-bottomed cylindrical tubular shape is formed inside case bottom 40 so as to surround exhaust hole 41 in a direction toward case main body 20. Partition wall 44 accommodates spring (biasing member) 42 and sealing member 43. Spring 42 presses sealing member 43 toward exhaust hole 41. Sealing member 43 has the same shape as exhaust hole 41 when viewed in plan and is slightly larger than exhaust hole 41. Sealing member 43 closes exhaust hole 41. In partition wall 44, vent hole 45 is formed at a location higher than sealing member 43 and upward from exhaust hole 41 of partition wall 44, in a state where sealing member 43 is pressed onto exhaust hole 41.

In case bottom 40, spring 42 biases sealing member 43 so as to close exhaust hole 41 in a normal condition, to prevent gas from being exhausted from case bottom 40.

It is possible to push press member 43 into exhaust hole 41 from outside, against the elastic force of spring 42. Sealing member 43 is pressed beyond the position of vent hole 45, whereby exhaust hole 41 is opened to form a gas exhaust path together with vent hole 45.

Thus, battery pack 10 maintains a hermetically sealed condition in a normal condition, and battery pack 10 is configured to form a gas exhaust means by imparting pressure externally.

The sizes of exhaust hole 41 and vent hole 45 are determined so that the gas exhaust condition will be appropriate. The gas exhaust speed is determined by the pressure in case 90 and the aperture areas of exhaust hole 41 and vent hole 45. Because the gas to be exhausted contains a flammable component, it is necessary to prevent the gas from being ignited when the gas is exhausted from case 90. As a result of research conducted by the present inventors, it has been found that the gas exhaust speed is an important factor in preventing ignition and that the effect of preventing ignition will be high when the gas exhaust speed exceeds a predetermined threshold value. For this reason, it is desirable that the aperture areas of exhaust hole 41 and vent hole 45 be determined so that the gas exhaust speed exceeds the threshold value.

In battery pack 10 according to the present exemplary embodiment, exhaust hole 41 is an opening that receives a pressing part from outside, as will be described later. Therefore, it is possible to suitably adjust the aperture area of vent hole 45. It is possible to set an exhaust speed by setting the exhaust area of vent hole 45 appropriately.

Vent hole 45 may be formed such that a part of partition wall 44 is a mesh structure. The term "mesh structure" means a lattice-shaped or mesh-shaped structure that includes periodically aligned fine line-shaped partitions. Note that each of the gaps between the fine line-shaped partitions serves as an opening for exhaust gas. For example, the width of each of the partitions is set to be smaller than the width of the opening, and the aperture ratio (the total area of the openings) is set to be greater than 50%. In addition, it is preferable that the mesh structure be composed of a metal.

By forming vent hole 45 with a mesh structure, sparks can be trapped easily while smooth gas exhaust performance is provided. When sparks are efficiently trapped by the mesh structure, the effect of preventing ignition is even higher.

### Second Exemplary Embodiment

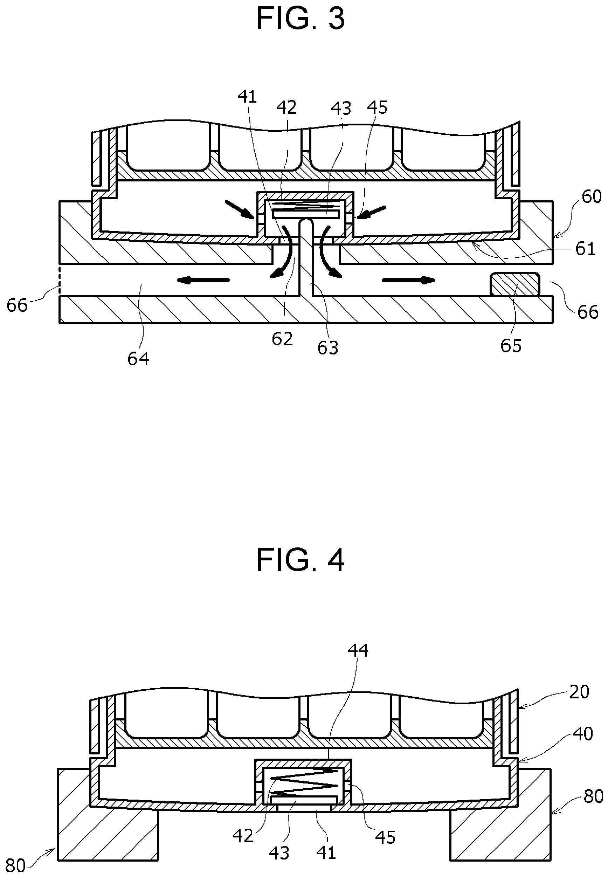

Next, with reference to Figs. 1 and 3, a device configured to exhaust gas from a battery pack will be described. The present exemplary embodiment illustrates an example in which the device is a charger for the battery pack.

Fig. 1 illustrates charger 60 for charging battery pack 10. Charger 60 includes pedestal 61 on which battery pack 10 is to be placed, and connector 67 that is to be connected to the charging terminal of battery pack 10.

Pedestal 61 serves as a stand for placing battery pack 10 thereon during charge. Pedestal 61 is provided with gas inlet hole 62. Exhaust duct 64 is provided under pedestal 61. Exhaust duct 64 communicates with gas inlet hole 62, passes through the inside of charger 60, and has an opening to outside.

It is desirable that pedestal 61 be formed in a shape that corresponds to the bottom surface of case bottom 40 of battery pack 10. When pedestal 61 is formed in this way, it is possible to exhaust gas through gas inlet hole 62 without forming a gap between case bottom 40 and pedestal 61 when battery pack 10 is placed thereon.

When battery pack 10 is placed, gas inlet hole 62 overlaps exhaust hole 41 of battery pack 10 and introduces the gas exhaust hole 41 from the gas exhaust path of battery pack 10 to guide the gas to exhaust duct 64.

Exhaust duct 64 exhaust the gas introduced from gas inlet hole 62 to the outside of charger 60. In the present exemplary embodiment, opening 66 is provided in a side surface of charger 60. Opening 66 may be provided in either one or both of opposite side surfaces of charger 60.

Pressing part 63 for pressing sealing member 43 of battery pack 10 upward protrudes above the surface of pedestal 61 through gas inlet hole 62 toward battery pack 10. In the present exemplary embodiment, pressing part 63 extends outward from exhaust duct 64 through gas inlet hole 62 and penetrates the surface of pedestal 61. However, the configuration of pressing part 63 is not limited thereto, and gas inlet hole 62 may be provided with pressing part 63 protruding toward battery pack 10.

With the above-described configuration, charger 60 is able to open the gas exhaust path that battery pack 10 has, when battery pack 10 is placed on charger 60, and to exhaust the gas to the outside of charger 60 through the path indicated by the arrows shown in Fig. 3. As a result, the generated gas does not remain in the gap space between the battery pack and the charger, and accordingly, there is no risk of starting fire.

Exhaust duct 64 may be provided with fire-extinguishing agent 65. Fire-extinguishing agent 65 is preferably disposed close to opening 66. As a result, it is possible to extinguish fire quickly even when the gas catches fire, and it is possible to prevent fire from propagating to the inside of battery pack 10. Possible examples of fire-extinguishing agent 65 include fire-extinguishing agents composed of hydrogen carbonates or phosphate salts.

Exhaust duct 64 may be provided with a mesh-shaped extinguishing structure in opening 66. It is desirable that the mesh structure is composed of a metal. By providing the mesh-shaped extinguishing structure in exhaust duct 64, sparks can be trapped easily while smooth gas exhaust performance is provided. When sparks are efficiently trapped by the mesh structure, the effect of preventing ignition is even higher. Although Fig. 3 shows that the extinguishing structure is provided in one of openings 66 of exhaust duct 64, it is also possible that the extinguishing structure may be provided in both of openings 66. It is also possible that the flame-extinguishing structure may be provided inside exhaust duct 64, or may be provided at a plurality of locations.

### Other Application Examples

With reference to Fig. 4, other application examples will be described. Fig. 4 illustrates a case in which battery pack 10 is installed in electrical appliance 80 that uses battery pack 10, showing a cross-sectional view including electrical appliance 80 and the gas exhaust mechanism of battery pack 10.

Normally, the gas exhaust mechanism of battery pack 10 is not actuated when installed in electrical appliance 80. Accordingly, sealing member 43 closes exhaust hole 41, as illustrated in Fig. 4, and battery pack 10 maintains its hermetically sealed condition.

There may be cases in which an abnormal condition occurs inside battery pack 10 due to a fault of electrical appliance 80 or influences from ambient temperature, resulting in an increase of the internal pressure of battery pack 10. In this case, it is preferable that sealing member 43, which is the gas exhaust mechanism provided in battery pack 10, is pressed upward to be able to exhaust mechanism the gas generated in battery pack 10 outside.

In this case, it is preferable that the pressing part for pressing sealing member 43 upward be configured to be movable such that it is normally accommodated inside electrical appliance 80 but emerges when an abnormal condition of battery pack 10 is detected. The specific structure of this configuration is not particularly limited.

As for abnormal conditions in battery pack 10, it is possible that, for example, the temperature of battery pack 10 is measured with electrical appliance 80, and when the temperature exceeds a predetermined range, it is determined to be an abnormal condition. The temperature of battery pack 10 can be estimated by measuring the temperature of the external surface of the case or other locations. It is also possible to detect an abnormal condition of battery pack 10 by detecting an output voltage or the like of battery pack 10.

Although exemplary embodiment of the present disclosure have been described hereinabove, they are merely illustrative examples and not intended to exclude embodiments other than those described above. For example, although the external appearance of the battery pack is in a rectangular parallelepiped shape, the external appearance is not limited thereto and may be in a circular cylindrical shape. Other shapes are also possible. In addition, although all the side surfaces of the rectangular parallelepiped shape are substantially the same shape, the sizes and shapes of the adjacent surfaces may be different. The proportions of the case lid and the case main body are not limited to those disclosed in the drawings. Furthermore, in the form in which the battery pack is actually used, there may be cases in which protrusions, recesses, handles, terminals, and the like are provided around the battery pack, but these alterations are made within the scope in which they do not affect the operations of the exhaust mechanism described in the present disclosure, and they do not affect the workings of the exhaust mechanism of the present exemplary embodiments.

The battery pack according to the present disclosure is usable as a component for supplying electric power to electronic devices. Examples include battery packs for lap-top computers, battery packs for cleaners, and battery packs for power tools. The battery pack is also applicable to batteries for power assisted bicycles. Applications of use other than those listed herein are also possible as long as they are within the applications of use of battery pack.

The present disclosure is not limited to the foregoing exemplary embodiments and modified examples, but various other modifications and alterations are of course possible within the scope of the claims set forth herein.

### REFERENCE MARKS IN THE DRAWINGS

- 10: battery pack
- 20: case main body
- 30: case lid
- 40: case bottom
- 41: exhaust hole
- 42: spring (biasing member)
- 43: sealing member
- 44: partition wall
- 45: vent hole
- 50: battery
- 51: holder
- 60: charger
- 61: pedestal
- 62: gas inlet hole
- 63: pressing part
- 64: exhaust duct
- 65: digestive agent
- 66: opening
- 67: connector
- 70: gas exhausting device
- 80: electrical appliance
- 90: case

## Claims

1. A battery pack comprising:
a plurality of batteries; and
a case accommodating the plurality of batteries,
the case including:
a discharge hole penetrating the case;
a partition wall being in a closed-bottomed tubular shape, the partition wall surrounding the discharge hole within the case;
a sealing member disposed within a tube defined by the partition wall, the sealing member closing the exhaust hole; and
a biasing member disposed within the tube defined by the partition wall and biasing the sealing member toward the exhaust hole, wherein:
the partition wall includes a vent hole defining a gas exhaust path together with the exhaust hole; and
the sealing member is configured to move inward when pressed from outside of the case to open the exhaust hole.

2. The battery pack according to claim 1, wherein a part of the partition wall includes a mesh structure forming the vent hole.

3. A device adapted for use with a battery pack, the battery pack including a plurality of batteries and a case accommodating the plurality of batteries, the case including an exhaust hole and a sealing member closing the exhaust hole, the device being configured to exhaust gas from the case and comprising:
a pedestal on which the battery pack is to be placed;
a gas inlet hole disposed in the pedestal at a location overlapping the hole of the battery pack;
an exhaust duct being a vent path disposed in the pedestal and communicating with the gas inlet hole, for guiding the gas exhausted from the battery pack to outside of the device; and
a pressing part protruding from the gas inlet hole, the pressing part configured to press the sealing member of the battery pack.

4. The device according to claim 3, further comprising a flame-antichloristic agent disposed in the exhaust duct.

5. The device according to claim 3, further comprising a mesh-shaped extinguishing structure disposed in the exhaust duct.

6. The device according to any one of claims 3 through 5, wherein the device is a charger for charging the battery pack.
